# EUROPEAN PATENT APPLICATION

(11) **EP 3 591 632 A1**
(43) Date of publication of application: **08.01.2020**
(21) Application number: 18191931.7
(22) Date of filing: 31.08.2018
(51) Int. Cl.: G08B 25/00

(54) **GATEWAY-BASED WARNING METHOD AND SYSTEM**

(30) Priority: 05.07.2018 TW 107123312
(71) Applicant: Climax Technology Co., Ltd., Taipei 114 (TW)
(72) Inventor: CHEN, Yi-Kai, 10850 Taipei City (TW)
(74) Representative: Karakatsanis, Georgios

(57) **Abstract**

A gateway-based warning method includes transmitting a detecting message to inform a corresponding gateway in a connect range by a detector associated with a detected event; broadcasting a notification message to notify other gateways within a notification range by the informed gateway; and transmitting warning messages to corresponding detectors in connect ranges by the notified gateways respectively.

## Description

### BACKGROUND OF THE INVENTION

### 1. FIELD OF THE INVENTION

The present invention generally relates to a home intelligent network, and more particularly to a gateway-based warning system.

### 2. DESCRIPTION OF RELATED ART

Home intelligent network is capable of controlling home facilities, such as lighting, heating, ventilation, air conditioning appliances, communication systems, entertainment and home security devices, to improve convenience, comfort, energy efficiency and security. Home intelligent network may be used to perform disaster warning and prevention by detecting an event (e.g., smoke or overheat caused by a fire).

Home intelligent network may be connected to external networks via a gateway. In conventional disaster prevention systems, when a fire is detected, a detector at the scene generates warning sound, or the gateway connects with a remote central system (or notification system) through the Internet, and the central system subsequently makes further notification. If network traffic congestion unfortunately occurs, the conventional disaster prevention systems cannot promptly warn and evacuate peoples in neighboring buildings.

For the foregoing reasons, a need has arisen to propose a novel warning system for overcoming disadvantages of the conventional disaster prevention systems.

### SUMMARY OF THE INVENTION

In view of the foregoing, it is an object of the embodiment of the present invention to provide a gateway-based warning system and method capable of quickly evacuating neighboring peoples to achieve effective warning and evacuation.

According to one embodiment, a gateway-based warning method includes the following steps: (a) transmitting a detecting message to inform a corresponding gateway in a connect range by a detector associated with a detected event; (b) broadcasting a notification message to notify other gateways within a notification range by the informed gateway; and (c) transmitting warning messages to corresponding detectors in connect ranges by the notified gateways respectively.

### BRIEF DESCRIPTION OF THE DRAWINGS

FIG. 1 shows a simplified schematic diagram illustrating a gateway-based warning system according to one embodiment of the present invention;
FIG. 2 shows a detailed block diagram illustrating one gateway of FIG. 1;
FIG. 3 shows a flow diagram illustrating a gateway-based warning method according to one embodiment of the present invention;
FIG. 4A shows a schematic diagram illustrating a broadcasting architecture for broadcasting the notification message by a gateway to other gateways; and
FIG. 4B shows a schematic diagram illustrating another broadcasting architecture for broadcasting the notification message by a gateway to other gateways.

### DETAILED DESCRIPTION OF THE INVENTION

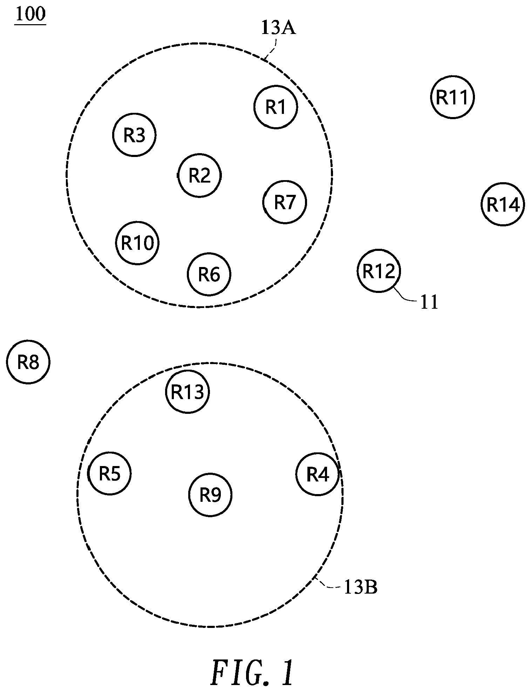

FIG. 1 shows a simplified schematic diagram illustrating a gateway-based warning system 100 according to one embodiment of the present invention. In the embodiment, the gateway-based warning system (warning system hereinafter) 100 may include a plurality of gateways 11 such as the exemplary gateways R1-R14 (FIG. 1), each or more gateways of which may construct a home (intelligent) network. In the specification, the term gateway may refer to a communication device disposed at a network node configured to interface with another network that uses different communication protocols.

According to one aspect of the embodiment, each gateway 11 may perform a broadcast function by directly communicating with other gateways 11 in order to transmit a notification message to neighboring gateways 11. In the specification, direct communication means that two gateways may communicate with each other without using Internet protocols such as Transmission Control Protocol/Internet Protocol (TCP/IP).

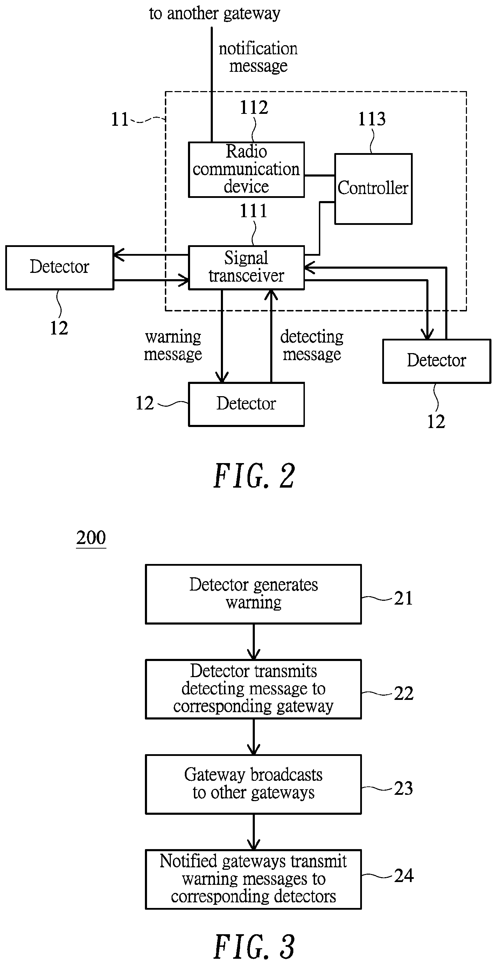

FIG. 2 shows a detailed block diagram illustrating one gateway 11 of FIG. 1. In the embodiment, the warning system 100 may include a plurality of detectors (or sensors) 12. Each gateway 11 may connect with one or more detectors 12 (three detectors 12 are exemplified in FIG. 2). The detector 12 of the embodiment may be a detector with a warning function such as a smoke detector, an overheat detector, a gas detector or a flood detector. The gateway 11 and the detector(s) 12 may communicate with each other in a wireless or wired manner.

In the embodiment, the gateway 11 may include a signal transceiver 111 configured to receive a detecting message transmitted by the detector 12. When the detector 12 detects an event (e.g., smoke or overheat caused by a fire), the detector 12 then transmits the detecting message to the signal transceiver 111 of the corresponding gateway 11. The gateway 11 of the embedment may include a radio communication device 112 configured to communicate with (the radio communication device 112 of) another gateway 11 via a predetermined radio signal (e.g., frequency-modulated or FM signal). The gateway 11 of the embodiment may include a controller 113 (e.g., central processing unit) configured to control the signal transceiver 111 and the radio communication device 112.

FIG. 3 shows a flow diagram illustrating a gateway-based warning method (warning method hereinafter) 200 according to one embodiment of the present invention. In step 21, when a detector 12 detects an event (e.g., smoke or overheat caused by a fire), the detector 12 associated with the detected event may generate a warning, such as warning sound and/or warning light. In step 22, the detector 12 associated with the detected event may transmit a detecting message to inform a corresponding gateway 11 in a connect range. At the same time, the controller 113 of the (informed) gateway 11 associated with the detected event may inform peoples in the connect range (e.g., the same home intelligent network as the corresponding gateway 11) in a wired or wireless manner. Moreover, the controller 113 of the (informed) gateway 11 associated with the detected event may control the signal transceiver 111 to transmit a warning message to other detectors 12 in the connect range, and the other detectors 12 then accordingly generate a warning, such as warning sound and/or warning light.

Subsequently, in step 23, the (informed) gateway 11 associated with the detected event may broadcast a notification message to notify other gateways 11 within a notification range. Specifically, upon receiving the detecting message by the signal transceiver 111 of the gateway 11 associated with the detected event, the corresponding controller 13 may control the radio communication device 112 to generate and transmit a radio signal (i.e., the notification message) to notify other gateways 11 within the notification range. FIG. 1 shows exemplary notification ranges 13A and 13B for the gateways R2 and R9, respectively. The notification range 13A (which covers five gateways R1, R3, R6, R7 and R10) for the gateway R2 is larger than the notification range 13B (which covers three gateways R4, R5 and R13) for the gateway R9. In general, a size of the notification range may be pre-determined according to blocking objects (e.g., walls) and distance among the gateways 11. The size of the notification range may be changed by adjusting transmitting strength of the radio communication device 112. Alternatively, the size of the notification range may be changed by adjusting receiving sensitivity of the radio communication device 112.

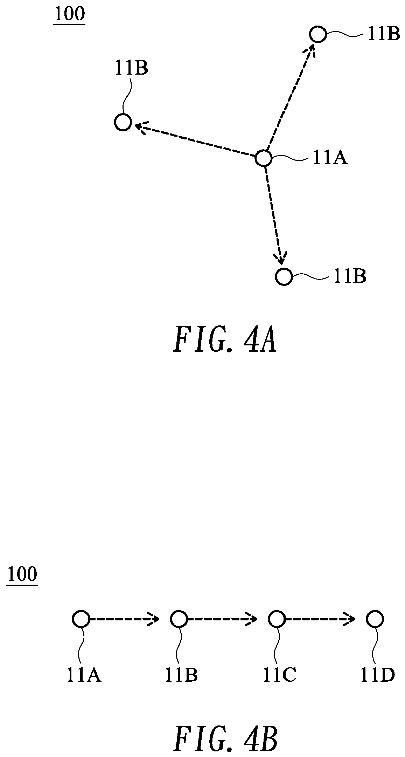

FIG. 4A shows a schematic diagram illustrating a broadcasting architecture for broadcasting the notification message by a gateway 11 to other gateways 11. In the broadcasting architecture shown in FIG. 4A, the (first) gateway 11A associated with the detected event may simultaneously broadcast the notification message to a plurality of neighboring (second) gateways 11B. In this example, the notification range for the first gateway 11A covers three second gateways 11B.

FIG. 4B shows a schematic diagram illustrating another broadcasting architecture for broadcasting the notification message by a gateway 11 to other gateways 11. In the broadcasting architecture shown in FIG. 4B, the (first) gateway 11A associated with the detected event may broadcast the notification message to a neighboring (second) gateway 11B. When the (second) gateway 11B receives the notification message (from the first gateway 11A), a specific count value in the notification message may be changed (e.g., increased by 1), and the changed notification message may be further broadcasted, by the second gateway 11B, to a neighboring (third) gateway 11C. Similarly, when the (third) gateway 11C receives the notification message (from the second gateway 11B), the specific count value in the notification message may be changed (e.g., increased by 1), and the changed notification message may be further broadcasted, by the third gateway 11C, to a neighboring (fourth) gateway 11D. If the specific count value has reached a predetermined threshold (as determined by the fourth gateway 11D), the fourth gateway 11D would not further broadcast the notification message. In this example, the notification range for the first gateway 11A covers the second gateway 11B, the third gateway 11C and the fourth gateway 11D.

When the radio communication devices 112 of the notified gateways 11 in the notification range receive the notification message, the controllers 113 of the notified gateways 11 may respectively control the corresponding signal transceivers 111 to transmit warning messages to corresponding detectors 12 in the connect ranges, and the corresponding detectors 12 may then generate warnings such as warning sound and/or warning light (step 24).

According to the embodiment set forth above, when an event is detected, the detector 12 on the scene not only generates a warning, but also informs a corresponding gateway 11. The informed gateway 11 then broadcasts to notify other gateways 11 in a notification range by direct communication, and the detectors 12 of the notified gateway 11 may also generate warnings to corresponding or neighboring peoples. The gateways 11 of the embodiment perform notification by direct communication, instead of connecting with any remote central system or notification system through network protocols (e.g., the Internet). Accordingly, neighboring peoples can be quickly warned and evacuated without being delayed by network traffic congestion, therefore achieving effective warning and evacuation.

Although specific embodiments have been illustrated and described, it will be appreciated by those skilled in the art that various modifications may be made without departing from the scope of the present invention, which is intended to be limited solely by the appended claims.

## Claims

1. A gateway-based warning method, comprising:
(a) transmitting a detecting message to inform a corresponding gateway in a connect range by a detector associated with a detected event;
(b) broadcasting a notification message to notify other gateways within a notification range by the informed gateway; and
(c) transmitting warning messages to corresponding detectors in connect ranges by the notified gateways respectively.

2. The method of claim 1, wherein the step (a) further comprises:
the informed gateway transmitting a warning message to other detectors in the connect range, said other detectors accordingly generating warnings.

3. The method of claim 1, wherein the step (b) comprises:
the informed gateway broadcasting the notification message to said other gateways nearby.

4. The method of claim 1, wherein the step (b) comprises:
the informed gateway simultaneously broadcasting the notification message to said other gateways nearby.

5. The method of claim 1, wherein the step (b) comprises:
the informed gateway broadcasting the notification message to a second gateway nearby; and
the second gateway changing a specific count value in the notification message after receiving the notification message, and then broadcasting the notification message with the changed specific count value to a third gateway nearby;
wherein the above steps are repeatedly performed until the specific count value reaches a predetermined threshold.

6. The method of claim 1, wherein the notification message comprises a radio signal.

7. The method of claim 1, wherein the notification message is broadcast to the notified gateways without through any network protocol.

8. A gateway-based warning system, comprising:
a plurality of gateways; and
a plurality of detectors, each said gateway connecting with one or more said detectors in a respective connect range;
wherein the detectors and the gateways perform the following steps:
(a) transmitting a detecting message to inform a corresponding gateway in a connect range by a detector associated with a detected event;
(b) broadcasting a notification message to notify other gateways within a notification range by the informed gateway; and
(c) transmitting warning messages to corresponding detectors in connect ranges by the notified gateways respectively.

9. The system of claim 8, wherein the gateway comprises:
a signal transceiver that receives the detecting message from the detector associated with the detected event, and transmits the warning message to the corresponding detectors in the connect range;
a radio communication device that broadcasts the notification message to another gateway or receives the notification message from another gateway; and
a controller that controls the signal transceiver and the radio communication device;
wherein the notification message comprises a radio signal generated by the radio communication device.

10. The system of claim 9, wherein the step (a) further comprises:
the transceiver of the informed gateway transmitting a warning message to other detectors in the connect range, said other detectors accordingly generating warnings.

11. The system of claim 9, wherein the step (b) comprises:
the radio communication device of the informed gateway broadcasting the notification message to said other gateways nearby.

12. The system of claim 9, wherein the step (b) comprises:
the radio communication device of the informed gateway simultaneously broadcasting the notification message to said other gateways nearby.

13. The system of claim 9, wherein the step (b) comprises:
the radio communication device of the informed gateway broadcasting the notification message to the radio communication device of a second gateway nearby; and
the radio communication device of the second gateway changing a specific count value in the notification message after receiving the notification message, and then broadcasting the notification message with the changed specific count value to the radio communication device of a third gateway nearby;
wherein the above steps are repeatedly performed until the specific count value reaches a predetermined threshold.

14. The system of claim 9, wherein the notification message is broadcast to the notified gateways by the radio communication device of the informed gateway without through any network protocol.
